# EUROPEAN PATENT APPLICATION

(11) **EP 4 468 416 A1**
(43) Date of publication of application: **27.11.2024**
(21) Application number: 23743282.8
(22) Date of filing: 18.01.2023
(51) Int. Cl.: H01M 4/525, H01M 4/131, H01M 4/36, H01M 4/505, H01M 4/62, H01M 10/052, H01M 10/0562

(54) **COATED POSITIVE ELECTRODE ACTIVE MATERIAL FOR LITHIUM SECONDARY BATTERY AND LITHIUM SECONDARY BATTERY**

(30) Priority: 20.01.2022 JP 2022007394
(71) Applicant: SUMITOMO METAL MINING CO., LTD., Tokyo 105-8716 (JP)
(72) Inventor: KANADA, Satoshi, Tokyo 105-8716 (JP); MORINO, Yusuke, Nagaokakyo-shi, Kyoto 617-8555 (JP)
(74) Representative: Jones, Nicholas Andrew
(86) International application number: PCT/JP2023/001355
(87) International publication number: WO 2023/140288

(57) **Abstract**

A coated positive electrode active material for lithium secondary batteries includes a positive electrode active material, and a coating layer disposed on a surface of the positive electrode active material. The coating layer includes niobium atoms. When peaks observed at a niobium (Nb)-L₃ absorption edge of an X-ray absorption fine structure spectrum of the coated positive electrode active material measured by X-ray absorption fine structure spectroscopy (XAFS) are designated as a peak A, a peak B, and a peak C in an order from lower absorption energy, a difference between absorption energy at a peak top of the peak A and absorption energy at a peak top of the peak C is 12.9 eV or greater.

## Description

### TECHNICAL FIELD

The present invention relates to a coated positive electrode active material for lithium secondary batteries and a lithium secondary battery.

### BACKGROUND ART

As mobile electronic devices, such as cell phones and laptop computers, have been becoming more readily available in recent years, developments of small and light-weight lithium secondary batteries having high energy densities are strongly desired. Moreover, developments of lithium secondary batteries having high energy densities as batteries for electric vehicles are strongly desired.

In recent years, solid-state batteries have attracted attention as secondary batteries satisfying such demands. A solid-state battery includes a positive electrode layer, a solid electrolyte layer, a negative electrode layer, and the like. The solid-state battery is a battery that is desired to be put into practical use from a viewpoint of a high energy density, high output, high voltage, high safety, and the like, compared to a battery using an electrolyte (electrolytic solution) of related art, such as an organic solvent or the like.

However, a currently available solid-state battery does not sufficiently achieve high output characteristics and high voltage endurance. One of the causes thereof includes formation of a high resistance layer at a contact interface between a solid electrolyte and a positive electrode active material.

It has been suggested that an interface layer interposed between a solid electrolyte and a positive electrode active material is effective for inhibiting formation of a high resistance layer at the contact interface between the solid electrolyte and the positive electrode active material.

For example, Patent Document 1 discloses a solid-state lithium battery using a lithium-ion conductive electrolyte as an electrolyte, where the lithium-ion conductive solid electrolyte is mainly formed of sulfide, and a surface of a positive electrode active material is covered with a lithium-ion conductive oxide. As the lithium-ion conductive oxide, LiNbO₃ and the like are listed. It is disclosed that the lithium-ion conductive oxide is preferably in an amorphous state.

Patent Document 2 discloses a positive electrode active material for a solid-state lithium secondary battery, which is used in a solid-state lithium secondary battery. In the disclosed positive electrode active material, surfaces of particles (referred to as "core particles") each formed of a spinel composite oxide including Li, Mn, O, and two or more other elements are covered with an amorphous compound including Li, A (A is at least one element selected from the group consisting of Ti, Zr, Ta, Nb, and Al), and O, and a molar ratio (Li/A) of Li to the A element at the surface determined by X-ray photoelectron spectroscopy (XPS) is from 1.0 to 3.5.

### RELATED-ART DOCUMENTS

### Patent Document

Patent Document 1: International Publication No. WO 2007/004590
Patent Document 2: International Publication No. WO 2018/012522

### Non-Patent Document

Non-Patent Document 1: ACS Appl. Mater. Interfaces 2018, 10, 1654-1661
Non-Patent Document 2: J. Phys. Chem. Solids Vol. 49, No. 9, 1095-1099 (1988)

### SUMMARY OF THE INVENTION

### Technical Problem

However, it was difficult to simultaneously achieve both desirable high output characteristics and desired voltage endurance characteristics merely by interposing an amorphous lithium ion-conductive oxide layer including Li and Nb between a positive electrode active material and a solid electrolyte layer as described in Patent Documents 1 and 2.

In view of the above problem in the related art, the present invention aims to provide a coated positive electrode active material for lithium secondary batteries, which can improve output characteristics and voltage endurance characteristics, when applied for a lithium secondary battery.

### Solution to Problem

According to one aspect of the present invention for achieving the above, a coated positive electrode active material for lithium secondary batteries includes a positive electrode active material, and a coating layer that is disposed on a surface of the positive electrode active material and includes niobium atoms. When peaks observed at a niobium (Nb)-L₃ absorption edge of an X-ray absorption fine structure spectrum of the coated positive electrode active material measured by X-ray absorption fine structure spectroscopy (XAFS) are designated as a peak A, a peak B, and a peak C in an order from lower absorption energy, a difference between absorption energy at a peak top of the peak A and absorption energy at a peak top of the peak C is 12.9 eV or greater.

### Advantageous Effects of Invention

One aspect of the present invention can provide a coated positive electrode active material for lithium secondary batteries, which can improve output characteristics and voltage endurance characteristics when applied for a lithium secondary battery.

### BRIEF DESCRIPTION OF THE DRAWINGS

[FIG. 1]

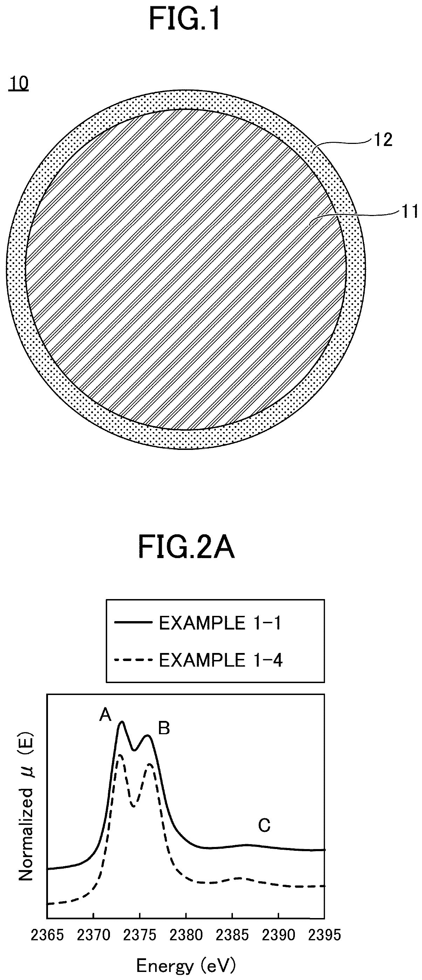

   FIG. 1 is a schematic cross-sectional view of a coated positive electrode active material for lithium secondary batteries according to an embodiment of the present disclosure.
[FIG. 2A]
   FIG. 2A is X-ray absorption fine structure spectra around a niobium (Nb)-L₃ absorption edge, obtained by X-ray absorption fine structure spectroscopy in Example 1-1 and Example 1-4.
[FIG. 2B]

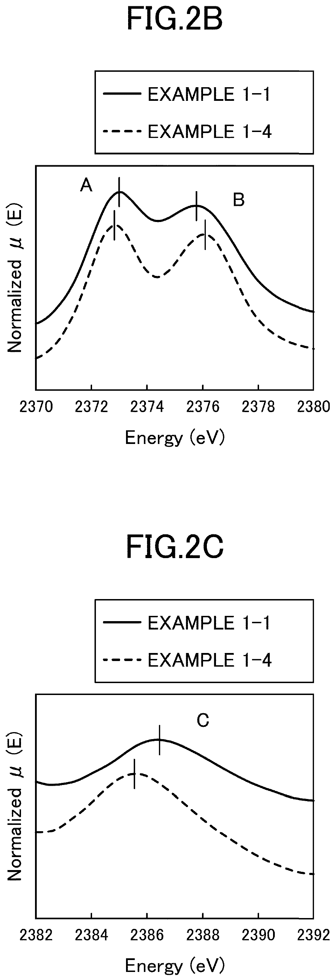

   FIG. 2B is X-ray absorption fine structure spectra around the niobium (Nb)-L₃ absorption edge obtained by X-ray absorption fine structure spectroscopy in Example 1-1 and Example 1-4.
[FIG. 2C]
   FIG. 2C is X-ray absorption fine structure spectra around the niobium (Nb)-L₃ absorption edge obtained by X-ray absorption fine structure spectroscopy in Example 1-1 and Example 1-4.
[FIG. 3]

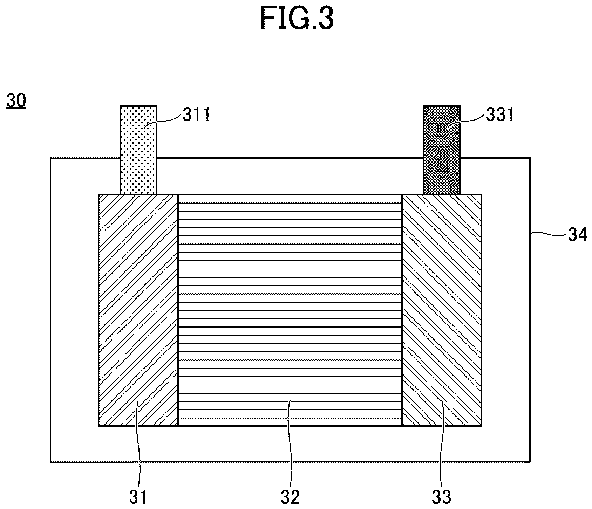

   FIG. 3 is a schematic cross-sectional view of a lithium secondary battery.

### DESCRIPTION OF EMBODIMENTS

Embodiments of the present invention will be described hereinafter, but the present invention is not limited to the following embodiments. Various modifications and substitutions can be made in the following embodiments without departing from the scope of the present invention.

### [Coated positive electrode active material for lithium secondary batteries]

A schematic cross-sectional view of a coated positive electrode active material for lithium secondary batteries (may be also merely described as a "coated positive electrode active material" hereinafter) of the present embodiment is illustrated in Fig. 1.

As illustrated in Fig. 1, the coated positive electrode active material for lithium secondary batteries 10 of the present embodiment can include a positive electrode active material 11 and a coating layer 12 that is disposed on a surface of the positive electrode active material 11 and includes niobium atoms.

### (1) Regarding components included in coated positive electrode active material

Each of components included in the coated positive electrode active material of the present embodiment will be described.

### (1-1) Positive electrode active material

A material of the positive electrode active material is not particularly limited, as long as the positive electrode active material is a positive electrode active material which enables insertion and removal of Li through an electrochemical reaction.

As the positive electrode active material, at least one positive electrode active material selected from intercalation-type positive electrode active materials, such as LiCoO₂, LiNiO₂, LiNiₓCo_{y}Mn_{z}O₂ (x + y + z = 1), LiNiₓCo_{y}Al_{z}0₂ (x + y + z = 1), LiMn₂O₄, LiNi_{0.5}Mn_{1.5}O₄, LiFePO₄, LiNiFePO₄, and the like, and conversion reaction-type positive electrode materials, such as FeF₃, Li₂S, and the like, can be used.

The positive electrode active material preferably has a layered structure. This is because, output characteristics can be particularly improved when the positive electrode active material having the layered structure is applied for a lithium secondary battery. The positive electrode active material having a layered structure encompasses that a crystal structure of the positive electrode active material has a layered structure. The positive electrode active material having a layered structure preferably includes at least one structure selected from layered rock salt structures (α-NaFeO₂ structures), such as LiCoO₂, LiNiO₂, LiNiₓCo_{y}Mn_{z}O₂ (x + y + z = 1), LiNiₓCo_{y}Al_{z}O₂ (x + y + z = 1), and the like, Li-rich layered structures, such as Li₂MnO₃, Li₂MnO₃-LiNiₓCo_{y}Mn_{z}O₂ (x + y + z = 1), and the like, and zigzag layered structures, such as LiMnO₂ and the like.

A structure of the positive electrode active material can be determined, for example, by analysis methods, such as X-ray diffraction, electron diffraction, and the like.

Moreover, the positive electrode active material preferably includes nickel, cobalt, and manganese, where a molar ratio of nickel (Ni), cobalt (Co), and manganese (Mn) is Ni : Co : Mn = x : y : z, which preferably satisfies relationships of 0.4 < x ≤ 1.0, 0 ≤ y < 0.3, 0 ≤ z < 0.4, and x + y + z = 1. This is because a discharge capacity becomes particularly large when the positive electrode active material having the above elements at the above ratio is applied for a lithium secondary battery.

Note that, even in the case where the positive electrode active material includes nickel, cobalt, and manganese as described above, the positive electrode active material preferably has a layered structure.

A molar ratio of each element included in the above positive electrode active material can be evaluated and determined, for example, by analysis methods, such as X-ray fluorescence, ICP atomic emission spectroscopy, and the like.

A form of the positive electrode active material included in the coated positive electrode active material of the present embodiment is not particularly limited. The positive electrode active material may be positive electrode active material particles, which have a mean particle diameter of from several nanometers to several tens of micrometers, and include primary particles or secondary particles where primary particles are aggregated. The positive electrode active material may be a thin positive electrode film (e.g., a positive electrode film formed by pulse laser deposition (PLD)).

### (1-2) Coating layer

For example, a niobium atom-containing compound can be used for the coating layer. Examples thereof include at least one compound selected from oxides, such as Nb₂O₅ and the like, lithium complex oxides, such as LiNbO₃, Li₃NbO₄, LiNb₃O₈, and the like, fluorides such as NbF₅ and the like, and lithium complex fluorides, such as LiNbF₆ and the like.

The coating layer can be disposed at at least part of a surface of the positive electrode active material. The coating layer may be disposed to cover the entire surface of the positive electrode active material.

### (2) Regarding local structure of coating layer

As described above, it was difficult to simultaneously achieve both desirable high output characteristics and desirable voltage endurance characteristics merely by interposing an amorphous lithium ion-conductive oxide layer including Li and Nb between a positive electrode active material and a solid electrolyte layer.

The inventors of the present invention studied for a cause of the above problem. Then, the inventors became aware of a fact that a local structure around a Nb atom that would play an important role in a layer interposed between a positive electrode active material and a solid electrolyte layer had not been sufficiently studied. Therefore, the inventors conducted research on a structure of a niobium atom-containing coating layer on a surface of a positive electrode active material, based on which the present invention was accomplished.

A local structure of the coating layer including niobium atoms, which is included in the coated positive electrode active material of the present embodiment, will be described.

Fig. 2A to Fig. 2C depict X-ray absorption fine structure spectra around a niobium (Nb)-L₃ absorption edge appearing in an absorption energy range of 2350 eV or greater and 2400 eV or less (may be merely described as "absorption spectra" or "absorption spectrum" hereinafter), when the coated positive electrode active material including the coating layer is measured by X-ray absorption fine structure spectroscopy (XAFS). As depicted in Fig. 2A, each absorption spectrum includes three peaks in total, that is, two peaks having relatively high intensities, and one peak having a low intensity in the order from the lower absorption energy. In the present specification, these three peaks of the above absorption spectrum are designated as a peak A, a peak B, and a peak C in the order from the lower absorption energy. Note that, the absorption energy at a peak top of the peak A is in the range of 2370 eV to 2374.5 eV, the absorption energy at a peak top of the peak B is in the range of 2374.5 eV to 2379 eV, and the absorption energy at a peak top of the peak C is in the range of 2382 eV to 2390 eV.

In XAFS of the compound including Nb and O, it is assumed that peak positions at the niobium (Nb)-L₃ absorption edge depend mainly on an arrangement of oxygens near a Nb atom.

According to Non-Patent Document 1, the peak A and peak B at the niobium (Nb)-L₃ absorption edge of Fig. 2A to Fig. 2C correspond to absorption energy due to electron transition from the 2p_{2/3} orbital of O to the 4d orbital, and the peak C corresponds to absorption energy due to electron transition from the 2p_{2/3} orbital of O to the 5s orbital of Nb.

According to Non-Patent Document 2, moreover, the energy of the peak A and the energy of the peak B of Fig. 2A to Fig. 2C correspond to absorption energy due to electron transition from the energy level of Nb 2p_{3/2} to the energy levels of 2t_{2g} and 3e_{g}, respectively, considering that Nb and O within an oxygen octahedron framework form bond orbitals according to the ligand field theory. Moreover, the peak C corresponds to the absorption due to electron transition from the energy level of Nb2p_{3/2} to the energy level of 3a_{1g}.

In either case, the energy difference between the peak A and the peak B and the energy difference between the peak A and the peak C mainly indicate an energy difference between bond orbitals. An energy difference between bond orbitals or a split energy gap mainly reflects the arrangement and symmetry of ligands (oxygens) around Nb, and a Nb-O bond length. Therefore, the energy difference between the peak A and the peak B and the energy difference between the peak A and the peak C can be regarded as parameters indirectly reflecting a local structure around a Nb atom.

According to the study conducted by the inventors of the present invention, a difference between absorption energy at a peak top of the peak A and absorption energy at a peak top of the peak C is preferably 12.9 eV or greater, and more preferably 12.9 eV or greater and 13.8 eV or less.

Among the characteristic peak A, peak B, and peak C reflecting the local structure of Nb in the coating layer, a difference between the absorption energy at the peak top of the peak A and the absorption energy at the peak top of the peak C is adjusted to be 12.9 eV or greater so that ion conductivity of the coating layer is improved, and the local structure within the coating layer is likely to be stably maintained also within a lithium secondary battery. Therefore, a lithium battery having excellent output characteristics and voltage endurance characteristics is obtained when the coated positive electrode active material having the coating layer is applied for a lithium secondary battery.

Moreover, a difference between absorption energy at a peak top of the peak A and absorption energy at a peak top of the peak B is preferably 3.1 eV or less, and more preferably 2.3 eV or greater and 3.1 eV or less.

Among the characteristic peak A, peak B, and peak C reflecting the local structure of Nb in the coating layer, a difference between the absorption energy at the peak top of the peak A and the absorption energy at the peak top of the peak B is adjusted to be 3.1 eV or less so that ion conductivity of the coating layer is improved, and the local structure within the coating layer is likely to be stably maintained also within a local structure. Therefore, a lithium secondary battery having excellent output characteristics and voltage endurance characteristics is obtained when the coated positive electrode active material having the coating layer is applied for a lithium secondary battery.

Note that, the above-described effect can be obtained when either the difference between the absorption energy at the peak top of the peak A and the absorption energy at the peak top of the peak C (may be also described as an "absorption energy difference 1" hereinafter) or the difference between the absorption energy at the peak top of the peak A and the absorption energy at the peak top of the peak B (may be also described as an "absorption energy difference 2" hereinafter) is within the above corresponding range. Therefore, it is sufficient for the coated positive electrode active material of the present embodiment, if either the absorption energy difference 1 or the absorption energy difference 2 is within the above corresponding range, but it is preferred that both the absorption energy difference 1 and the absorption energy difference 2 are within the above corresponding ranges.

In a lithium secondary battery for which the coated positive electrode active material that includes the coating layer is applied, a capacity of a battery cell is gradually reduced as charging and discharging are repeated. As the battery cell is deteriorated as above, the local structure of Nb in the coating layer included in the coated positive electrode active material also changes, and the change of the local structure of Nb is also reflected on a niobium (Nb)-L₃ absorption edge of an X-ray absorption fine structure spectrum. As the deterioration progresses, the above-described difference between the absorption energy at the peak top of the peak A and the absorption energy at the peak top of the peak B tends to decrease, and the difference between the absorption energy at the peak top of the peak A and the absorption energy at the peak top of the peak C tends to increase.

According to the study conducted by the inventors of the present invention, deterioration of a battery cell is not progressed and high output is maintained, if the difference between the absorption energy at the peak top of the peak A and the absorption energy at the peak top of the peak B is 2.3 eV or greater.

Moreover, deterioration of a battery cell is not progressed and high output is maintained, if the difference between the absorption energy at the peak top of the peak A and the absorption energy at the peak top of the peak C is 13.8 eV or less.

Therefore, the above-described absorption energy difference 1 of a lithium secondary battery, which has been repeatedly charged and discharged, is also preferably 2.3 eV or greater. Moreover, the absorption energy difference 2 of the lithium secondary battery is preferably 13.8 eV or less.

Moreover, the coating layer preferably has low crystallinity, and is more preferably amorphous. This is because lithium-ion conductivity of the coating layer is improved, which inhibits increase in resistance, as the coating layer has low crystallinity, so that a battery capacity is increased when the coated positive electrode active material including the coating layer is applied for a lithium secondary battery. When the coating layer is amorphous, the above effect can be particularly enhanced. The low crystallinity of the coating layer can be confirmed, for example, by X-ray diffraction. If the coating layer is amorphous, a diffraction peak derived from a Nb compound is not detected.

### [Lithium secondary battery]

The lithium secondary battery of the present embodiment can include a positive electrode, a negative electrode, and a solid electrolyte layer.

Specifically, for example, the lithium secondary battery 30 as illustrated in Fig. 3 can include a positive electrode 31, a solid electrolyte layer 32, and a negative electrode 33. As illustrated in Fig. 3, the solid electrolyte layer 32 can be interposed between the positive electrode 31 and the negative electrode 33, where the above members can be sealed in a container 34. A positive electrode terminal 311 and a negative electrode terminal 331 are provided to the positive electrode 31 and the negative electrode 33, respectively, so that the positive electrode 31 and the negative electrode 33 are each configured to be able to be coupled to a member outside the container 34.

The positive electrode can include at least the above-described coated positive electrode active material. The positive electrode may be composed of the above-described coated positive electrode active material, or may include the above-described coated positive electrode active material and a solid electrolyte. As the solid electrolyte, for example, at least one solid electrolyte selected from sulfide-based solid electrolytes, oxide-based solid electrolytes, and polymer electrolytes can be used. For example, the positive electrode can include the above-described coated positive electrode active material and a sulfide-based solid electrolyte.

In addition to the coated positive electrode active material and the solid electrolyte, the positive electrode may further include: materials, such as conductive additives, binders, ionic liquids, and the like; other additives; and the like.

The solid electrolyte layer is not limited as long as the solid electrolyte layer includes a lithium-ion conductive solid electrolyte. The solid electrolyte layer may be composed of a solid electrolyte. For example, the solid electrolyte layer may further include other materials, such as a binder and the like.

The negative electrode is not limited as long as the negative electrode includes at least a negative electrode active material. The negative electrode may be composed of the negative electrode active material, or may include the negative electrode active material and a solid electrolyte. As the negative electrode active material, for example, a lithium-containing material, such as a metal lithium, a lithium alloy, or the like, or a storage material in which lithium ions can be stored and from which lithium ions can be released can be used. The storage material is not particularly limited. For example, natural graphite, artificial graphite, a fired product of an organic compound, such as a phenol resin or the like, or a carbon material, such as coke, or the like can be used as the storage material. As the solid electrolyte, for example, at least one solid electrolyte selected from a sulfide-based solid electrolyte, an oxide-based solid electrolyte, and a polymer electrolyte can be used. In addition to the negative electrode active material and the solid electrolyte, the negative electrode may further include: materials, such as conductive additives, binders, ionic liquids, and the like; other additives; and the like.

### (Regarding solid electrolyte)

The solid electrolyte used in the lithium secondary battery of the present embodiment is not particularly limited, as long as the solid electrolyte is a solid electrolyte having lithium-ion conductivity. As the solid electrolyte, for example, at least one solid electrolyte selected from a sulfide-based solid electrolyte, an oxide-based solid electrolyte, and a polymer electrolyte can be used.

Note that, the solid electrolyte can be included in the positive electrode or the negative electrode, as well as in the solid electrolyte layer, as described above. The solid electrolyte used in the solid electrolyte layer and the solid electrolyte used in the positive electrode or the negative electrode may be identical or different.

Examples of the sulfide-based solid electrolyte include, but are not limited to, sulfide-based amorphous solid electrolytes, sulfide-based crystalline solid electrolytes, argyrodite solid electrolytes, and the like. Specific examples of the sulfide-based solid electrolyte include, but are not limited to, a Li₂S-P₂S₅ system (e.g., Li₇P₃S₁₁, Li₃PS₄, Li₈P₂S₉, etc.), Li₂S-SiS₂, LiI-Li₂S-SiS₂, LiI-Li₂S-P₂S₅, LiI-LiBr-Li₂S-P₂S₅, Li₂S-P₂S₅-GeS₂ (e.g., Li₁₃GeP₃S₁₆, Li₁₀GeP₂S₁₂, etc.), LiI-Li₂S-P₂O₅, LiI-Li₃PO₄-P₂S₅, Li₇₋ₓPS₆₋ₓClₓ, and any combination of the foregoing, and the like.

Examples of the oxide-based solid electrolyte include, but are not limited to, Li₇La₃Zr₂O₁₂, Li₇₋ₓLa₃Zr₁₋ₓNbₓO₂₂, Li₇₋₃ₓLa₃Zr₂AlₓO₁₂, Li₃ₓLa_{2/3-x}TiO₃, Li₁₊ₓAlₓTi₂₋ₓ (PO₄)₃, Li₁₊ₓAlₓGe₂₋ₓ(PO₄)₃, Li₃PO₄, Li₃₊ₓPO₄₋ₓNₓ(LiPON), and the like.

Examples of the polymer electrolyte include, but are not limited to, polyethylene oxide (PEO), polypropylene oxide (PPO), copolymers of the foregoing, and the like.

The solid electrolyte may be glass or crystallized glass (glass ceramic).

### [Production method of coated positive electrode active material for lithium secondary batteries]

A production method of the coated positive electrode active material of the present embodiment is not particularly limited. For example, the production method can include the following mixing step and heat treatment step.

In the mixing step, a niobium-containing alkoxide solution can be mixed with the positive electrode active material serving as a base material.

In the heat treatment, a heat treatment can be performed on the mixture obtained in the mixing step.

In the coated positive electrode active material that includes the coating layer including niobium atoms disposed on a surface of the positive electrode active material, a local structure of the coating layer including niobium atoms can be controlled by conditions of the alkoxide solution, the mixing conditions, the heat treatment conditions, and the like. Therefore, the absorption energy difference at peak tops can be adjusted to the desired range in the X-ray absorption fine structure spectrum of the coating layer at the niobium (Nb)-L₃ absorption edge by adjusting the above conditions.

Each step will be described hereinafter.

### (Mixing step)

In the mixing step, first, a niobium-containing alkoxide solution can be prepared. The niobium-containing alkoxide solution can be prepared by dissolving, in an organic solvent, niobium alkoxide, and a raw material (raw material compound) suitable for forming a desired niobium compound that will constitute a coating layer. In a case where a coating layer is formed of a composite oxide with lithium, such as LiNbO₃ or the like, niobium alkoxide, and lithium alkoxide or lithium, or both lithium alkoxide and lithium can be dissolved in an organic solvent to prepare a niobium-containing alkoxide solution.

As the niobium alkoxide, for example, at least one niobium alkoxide selected from niobium pentamethoxide, niobium pentaethoxide, niobium-penta-n-propoxide, niobium-pentaisopropoxide, and niobium-penta-n-butoxide, and the like can be used. Among them, niobium pentaethoxide is suitably used.

As the lithium alkoxide or lithium, or both lithium alkoxide and lithium, for example, at least one compound selected from lithium ethoxide, lithium methoxide, lithium propoxide, lithium, and the like can be used. Among them, lithium ethoxide and lithium are suitably used.

The organic solvent is not particularly limited, as long as the organic solvent can dissolve the above compounds and the like. As the organic solvent, for example, alcohol can be used, and lower alcohol having a carbon number of 4 or less is preferably used. As the lower alcohol, at least one lower alcohol selected from ethanol, 2-propanol, 1-butanol, and the like can be used, and ethanol and 2-propanol can be suitably used.

Since niobium alkoxide is easily hydrolyzed, an anhydrous solvent is preferably used as the organic solvent. When the alkoxide solution is prepared, it is moreover preferred that inclusion of moisture from the atmosphere is minimized. Specifically, the alkoxide solution is prepared in the air whose dew point is controlled at -10°C or lower. The inhibition of hydrolysis of the niobium alkoxide in the alkoxide solution is considered to be effective for controlling the local structure of the coating layer.

In the production method of the coated positive electrode active material of the present embodiment, the alkoxide solution of a relatively low concentration is preferably prepared to form a thin coating film, thereby forming a coating layer having low crystallinity, preferably an amorphous coating layer. Note that, a molar ratio of Li or the like, which is added in addition to Nb, can be determined according to a desired composition of the coating layer (e.g., LiNbO₃).

A method of mixing the positive electrode active material and the niobium-containing alkoxide solution is not particularly limited, but the method is preferably a method that enables to thinly and uniformly coat a base material with the alkoxide solution. To this end, for example, a method where the alkoxide solution is sprayed while the positive electrode active material serving as a base material is stirred to be fluidized is preferred. An apparatus for stirring the positive electrode active material serving as the base material to fluidize the positive electrode active material can be any apparatus or method as long as the apparatus can inhibit grinding of particles or minimize damages from impacts. For example, a tumbling fluidized bed machine can be used. Moreover, drying may be performed while mixing by externally heating a stirring device or a mixing device, or by adjusting a temperature of a gas (air) fed into the device.

### (Heat treatment step)

In the heat treatment step, a heat treatment is performed on the base material to which the alkoxide solution is sprayed so that niobium alkoxide or the like included in the coating layer can be thermally decomposed. For example, in the case where the alkoxide solution includes Nb and Li, the heat treatment allows the coating layer to be in a state close to a composite oxide including Li and Nb. A local structure of the coating layer can be also controlled by the conditions of the heat treatment.

A temperature of the heat treatment is not particularly limited, but the temperature is preferably in a range of 200°C or higher and 350°C or lower. By setting the temperature of the heat treatment at 200°C or higher, thermal decomposition of alkoxide is sufficiently progressed to reduce carbon residues in the coating layer, and particularly, resistance of a positive electrode can be reduced when the coated positive electrode active material is applied for a lithium secondary battery.

By setting the temperature of the heat treatment at 350°C or lower, crystallinity of the coating layer can be lowered to form a coating layer having low crystallinity, or an amorphous coating layer. Therefore, resistance can be particularly reduced when the coated positive electrode active material is applied for a lithium secondary battery.

Duration of the heat treatment is also not limited. For example, the above temperature of the heat treatment is preferably retained for 0.5 hours or longer, and more preferably 1 hour or longer. The upper limit of the retention period is not particularly limited. For example, the retention period is preferably 12 hours or shorter.

In order to sufficiently remove carbons included in the alkoxide solution, as well as the adjustment of the heat treatment temperature and duration, a temperature may be temporarily retained at a temperature lower than the temperature of the heat treatment, followed by heating up to the temperature of the heat treatment, or a heating speed to heat up to the temperature of the heat treatment may be reduced. It is considered that the above temperature profile assuredly removes carbons of the solvent or the like, which remain without being evaporated, and facilitates the control of the local structure of the coating layer according to the temperature or atmosphere of the heat treatment.

When the temperature is temporarily retained at a temperature lower than the temperature of the heat treatment, for example, the temperature can be retained at 100°C or higher, which is the temperature lower than the temperature of the heat treatment by 20°C, for 10 minutes or longer and 2 hours or shorter. When the heating speed is reduced, for example, the temperature can be increased to the temperature of the heat treatment at the heating speed of 0.5 °C/min or less.

The atmosphere of the heat treatment is not limited as long as the atmosphere is an oxidizing atmosphere for accelerating thermal decomposition of alkoxide. The heat treatment is preferably carried out by introducing a gas having a higher oxygen concentration than that of air. For example, a gas having the oxygen concentration of 50% by volume or greater can be used.

The above-described absorption energy difference 1 or absorption energy difference 2 of the coated positive electrode active material obtained by the production method of the coated positive electrode active material of the present embodiment can be controlled, for example, by adjusting conditions, such as the alkoxide solution, the preparation method thereof, the mixing method, the temperature profile or atmosphere of the heat treatment, and the like, among various conditions of the above-described mixing step or heat treatment step.

To this end, a pre-test or the like is performed according to the used positive electrode active material or a coating layer to be formed, and for example, preparation conditions of the alkoxide solution in the mixing step, and the heat treatment conditions or the like in the heat treatment step are selected to control the absorption energy difference 1 or absorption energy difference 2 in the desired range.

### Examples

Hereinafter, the present invention will be specifically described with reference to examples. However, the present invention is not limited to the following examples.

### [Example 1]

The following coated positive electrode active materials of Example 1-1 to Example 1-9 were prepared and evaluated. Example 1-1 to Example 1-3, Example 1-5 to Example 1-7, and Example 1-9 are examples, and Example 1-4 and Example 1-8 are comparative examples.

### (Example 1-1)

### (1) Production of coated positive electrode active material

Lithium monoethoxide and niobium pentaethoxide were dissolved in an ethanol solution to produce an alkoxide solution including lithium and niobium. The preparation of the solution was carried out in the air whose dew point was adjusted to a range of -20°C to -60°C, and the solution was prepared by dissolving in ethanol so that a molar ratio of Li and Nb in the solution was to be 1 : 1.

Next, a powder of a positive electrode active material having a layered structure and having a composition represented by LiNi_{0.5}Co_{0.2}Mn_{0.3}O₂ was fluidized in a tumbling fluidized bed machine, and a temperature of the air fed to a fluidized layer was controlled as well as spraying the alkoxide solution including lithium and niobium to the fluidized layer. As a result, a coating film of a niobium-containing alkoxide solution, which was a precursor of a coating layer, was formed on the surface of each grain of the positive electrode active material powder (mixing step).

Thereafter, the positive electrode active material powder in which the precursor of the coating layer had been formed on the surfaces of the grains thereof was retained in an oxygen environment whose temperature was retained at 150°C for 30 minutes, then at 250°C for 3 hours, to thereby produce a coated positive active material having a coating layer, which included the positive electrode active material, and the coating layer that was disposed on the surface of the positive electrode active material and included Li and Nb (heat treatment step).

X-ray powder diffraction was performed on a powder of the coated positive electrode active material including the coating layer including Li and Nb. As a result, a diffraction peak derived from a Nb compound, such as LiNbO₃ or the like, was not observed, which confirmed that the coating layer was in an amorphous state.

XAFS was performed on the powder of the coated positive electrode active material that included the coating layer including Li and Nb by scanning the range of 2300 eV or greater and 2600 eV or less by a large-scale radiation light facility (radiation light source (Beamline: BL-10) of The SR Center Ritsumeikan University). During the XAFS, the range of 2350 eV to 2400 eV near the peak A, the peak B, and the peak C was scanned at the energy interval of 0.15 eV or less, and the measurement was performed in a partial fluorescence yield (PFY) mode.

Moreover, XAFS was also performed on K₂SO₄, and the energy axis was calibrated so that the white-line peak derived from SO₄ of K₂SO₄ fell within the range of 2481.72 ± 0.02 eV.

From the obtained absorption spectrum, a background was removed using XAFS analysis software "Athena" widely used in XAFS, and the resultant absorption spectrum was subjected to standardization processing to adjust the intensity of attenuated XAFS vibrations to 1, thereby obtaining an X-ray absorption fine structure spectrum around a niobium (Nb)-L₃ absorption edge for determining positions of a peak A, a peak B, and a peak C.

Note that, the removal of the background at the lower energy side from the absorption edge was performed by linear extrapolation with reference to the spectrum form. Moreover, the removal of the background at the higher energy side from the absorption edge was performed with a spline curve passing through a center of vibrations with reference to the region where the XAFS vibrations were attenuated.

The obtained X-ray absorption fine structure spectrum around the niobium (Nb)-L₃ absorption edge is depicted in Fig. 2A to Fig. 2C. Fig. 2A depicts an entire region of the spectrum including the peak A to the peak C, and Fig. 2B depicts the enlarged spectrum in the region near the peak A and the peak B. Fig. 2C depicts the enlarged spectrum in the region near the peak C.

As depicted in Fig. 2A, the X-ray absorption fine structure spectrum around the niobium (Nb)-L₃ absorption edge has three peaks, including two absorption peaks having large intensities (peak A: 2373.03 eV, peak B: 2375.69 eV) and a peak having the smaller intensity and present at the higher energy side than the two peaks (peak C: 2386.44 eV). In this example, the difference between the absorption energy at the peak top of the peak A and the absorption energy at the peak top of the peak B was 2.66 eV, and the difference between the absorption energy at the peak top of the peak A and the absorption energy at the peak top of the peak C was 13.41 eV.

### (2) Evaluation of electrochemical characteristics

### (2-1) Production of solid-state battery

As an evaluation of electrochemical characteristics, a solid-state battery including sulfide-based solid electrolyte was produced by the following method to perform an evaluation.

### (Positive electrode)

The coated positive electrode material including the coating layer including Li and Nb and a sulfide-based solid electrolyte powder (Li₆PS₅Cl, argyrodite structure sulfide-based solid electrolyte) were mixed at a mass ratio of coated positive electrode active material : solid electrolyte = 70 : 30. Then, the obtained mixture was molded to form a positive electrode.

### (Solid electrolyte layer)

As for a solid electrolyte layer (separator layer), a sulfide-based solid electrolyte powder identical to the one used in the positive electrode was used, and was molded to produce the solid electrolyte layer.

### (Negative electrode)

As a negative electrode, an indium-lithium alloy was used. The indium-lithium alloy was produced by pressure-bonding a small piece of a lithium foil to an indium foil to diffuse lithium in indium.

Three layers, which were the positive electrode, the solid electrolyte layer, and the negative electrode, were stacked in this order, and the stack was pressure-molded, followed by laminate packaging the molded stack, thereby producing a lithium secondary battery.

### (2-2) Evaluation of discharge capacity

The produced solid-state battery was charged with a constant electric current in the environment of 25°C up to a cell voltage of 3.63 V (4.25 V based on Li potential) at the current density of 0.1 C, followed by discharging with a constant voltage to the current density of 0.01 C at the cell voltage of 3.63 V. Then, the solid-state battery was discharged with a constant electric current to the cell voltage of 2.38 V (3.00 V based on Li potential) at 0.1 C, followed by discharging with a constant electric current to the current density of 0.01 C at the cell voltage of 2.38 V.

Thereafter, in the same conditions, constant-current charging to the cell voltage of 3.63 V and constant-voltage charging to the cell voltage of 3.63 V were performed, followed by performing constant-current discharging to the cell voltage of 2.38 V at the current density of 1 C, and a discharge capacity of the solid-state battery during the above charging and discharging was evaluated as output characteristics. In this example, the discharge capacity was 120 mAh/g.

### (2-3) Evaluation of capacity retention rate at high voltage

The produced solid-state battery was charged with a constant electric current in the environment of 25°C up to a cell voltage of 3.93 V (4.55 V based on Li potential) at a current density of 0.1 C, followed by performing constant-current charging at 3.93 V until the current density became 0.01 C.

Thereafter, constant-current discharging was performed at the cell voltage of 2.38 V (3.00 V based on Li potential) at 0.1 C, followed by performing constant-voltage discharging at 2.38 V until the current density became 0.01 C (initial charging and discharging).

The constant-current discharge capacity of the above charging and discharging was determined as a pre-endurance-test capacity A. A was 178.0 mAh/g.

Then, constant-current charging to the cell voltage of 3.93 V and constant-voltage charging at 3.9 V were performed in the same conditions as the charging in the initial charging and discharging. The solid-state battery in the above charged state was moved to an environment of 60°C, and constant-voltage continuous charging (trickle charging) was performed at the cell voltage of 3.93 V for 120 hours.

Then, the battery was returned to 25°C, and constant-current discharging to the cell voltage of 2.38 V and constant-voltage discharging at 2.38 V were performed in the same conditions as the discharging in the initial charging and discharging (second charging and discharging).

Subsequently, charging and discharging were again performed in the same conditions as the initial charging and discharging (third charging and discharging).

The constant-current discharge capacity in the above charging and discharging (during the third charging and discharging) was determined as a post-endurance-test capacity B. B was 151.3 mAh/g. A value of B/A x 100 was determined as a "capacity retention rate at high voltage" indicating high voltage endurance. The above battery had B/A x 100 of 85.0%.

The evaluation results are presented in Table 1.

### (Example 1-2)

A coated positive electrode active material was produced and evaluated in the same manner as in Example 1-1, except that the heat treat temperature of the heat treatment step was set at 300°C. The evaluation results are presented in Table 1.

### (Example 1-3)

A coated positive electrode active material was produced and evaluated in the same manner as in Example 1-1, except that the heat treat temperature of the heat treatment step was set at 350°C. The evaluation results are presented in Table 1.

### (Example 1-4)

A coated positive electrode active material was produced and evaluated in the same manner as in Example 1-1, except that the heat treat temperature of the heat treatment step was set at 400°C. The evaluation results are presented in Table 1.

Moreover, the obtained X-ray absorption fine structure spectrum around the niobium (Nb)-L₃ absorption edge is depicted in Figs. 2A to 2C.

### (Example 1-5)

A coated positive electrode active material was produced and evaluated in the same manner as in Example 1-1, except that the layered structure positive electrode active material powder represented by the composition of LiNi_{0.5}Co_{0.2}Mn_{0.3}O₂ was changed to a layered structure positive electrode active material powder represented by a composition of LiNi₀.₈Co_{0.1}Mn_{0.1}O₂, and the heat treatment temperature in the heat treatment step was set at 200°C. The evaluation results are presented in Table 1.

### (Example 1-6)

A coated positive electrode active material was produced and evaluated in the same manner as in Example 1-5, except that the heat treat temperature of the heat treatment step was set at 250°C. The evaluation results are presented in Table 1.

### (Example 1-7)

A coated positive electrode active material was produced and evaluated in the same manner as in Example 1-5, except that the heat treat temperature of the heat treatment step was set at 300°C. The evaluation results are presented in Table 1.

### (Example 1-8)

A coated positive electrode active material was produced and evaluated in the same manner as in Example 1-5, except that the heat treat temperature of the heat treatment step was set at 400°C. The evaluation results are presented in Table 1.

### (Example 1-9)

A coated positive electrode active material was produced and evaluated in the same manner as in Example 1-1, except that 70Li₂S-30P₂S₅ (Li₇P₃S₁₁) was used as the sulfide-based solid electrolyte powder when the solid-state battery was produced. The evaluation results are presented in Table 1.

**[Table 1]**

| | POSITIVE ELECTRODE ACTIVE MATERIAL (LiNiₓCo_{y}Mn_{z}O₂) | | | HEAT TREATMENT TEMPERATURE | ABSORPTION ENERGY DIFFERENCE BETWEEN PEAK A AND PEAK B | ABSORPTION ENERGY DIFFERENCE BETWEEN PEAK A AND PEAK C | SOLID ELECTROLYTE | 1 C DISCHARGE CAPACITY | CAPACITY RETENTION RATE AT HIGH VOLTAGE |
|---|---|---|---|---|---|---|---|---|---|
| | x:y:z | | | | | | | | |
| | x | y | z | (°C) | (eV) | (eV) | | (mAh/g) | (%) |
| EXAMPLE 1-1 | 50 | 20 | 30 | 250 | 2.66 | 13.41 | Li₆PS₅Cl | 120 | 85 |
| EXAMPLE 1-2 | 50 | 20 | 30 | 300 | 2.74 | 13.39 | Li₆PS₅Cl | 130 | 89 |
| EXAMPLE 1-3 | 50 | 20 | 30 | 350 | 2.81 | 13.35 | Li₆PS₅Cl | 115 | 87 |
| EXAMPLE 1-4 | 50 | 20 | 30 | 400 | 3.20 | 12.78 | Li₆PS₅Cl | 100 | 75 |
| EXAMPLE 1-5 | 80 | 10 | 10 | 200 | 2.72 | 13.41 | Li₆PS₅Cl | 140 | 80 |
| EXAMPLE 1-6 | 80 | 10 | 10 | 250 | 2.81 | 13.37 | Li₆PS₅Cl | 145 | 82 |
| EXAMPLE 1-7 | 80 | 10 | 10 | 300 | 3.01 | 13.07 | Li₆PS₅Cl | 145 | 83 |
| EXAMPLE 1-8 | 80 | 10 | 10 | 400 | 3.18 | 12.77 | Li₆PS₅Cl | 125 | 73 |
| EXAMPLE 1-9 | 50 | 20 | 30 | 250 | 2.66 | 13.41 | Li₂S-P₂S₅ | 120 | 85 |

As presented in Table 1, in the case where the composition of the positive electrode active material was LiNi_{0.5}Co_{0.2}Mn_{0.3}O₂, a large discharge capacity and desired output characteristics were confirmed when a difference between the absorption energy at the peak top of the peak A and the absorption energy at the peak top of the peak C was 12.9 eV or greater at the niobium (Nb)-L₃ absorption edge of the X-ray absorption fine structure spectrum obtained by the X-ray absorption fine structure spectroscopy (XAFS). Moreover, in this case, it was also confirmed that the capacity retention rate at high voltage was high and excellent voltage endurance characteristics were obtained.

Moreover, it was also confirmed that a discharge capacity was large, and desired output characteristics were obtained when the difference between the absorption energy at the peak top of the peak A and the absorption energy at the peak top of the peak B was 3.1 eV or less. Moreover, in this case, it was also confirmed that the capacity retention rate at high voltage was high and excellent voltage endurance characteristics were obtained.

The similar trends were also confirmed in the case where the composition of the positive electrode active material was LiNi_{0.8}Co_{0.1}Mn_{0.1}O₂.

In the case where the composition of the positive electrode active material was LiNi_{0.8}Co_{0.1}Mn_{0.1}O₂, it was confirmed that the energy density was larger than in the case of LiNi_{0.5}Co_{0.2}Mn_{0.3}O₂, which lead to the desired results.

Moreover, as demonstrated in Example 1-9, it was confirmed that the same effects were obtained in the case where the used sulfide-based solid electrolyte was Li₂S-P₂S₅.

### [Example 2]

Example 2 demonstrates that the same results are obtained in XAFS even when a sample is in a cell form.

Example 2-1 to Example 2-6 are all examples.

### (Example 2-1)

A solid-state battery was produced in the same manner as in Example 1-2 using a powder of the coated positive electrode active material having the coating layer including Li and Nb, which was produced in Example 1-2.

XAFS was performed on the produced solid-state battery by scanning the range of 2300 eV or greater and 2400 eV or less using the above-described large-scale radiation light facility. During the XAFS, the range of 2350 eV to 2400 eV near the peak A, the peak B, and the peak C was scanned at the energy interval of 0.17 eV or less.

As a sample, the laminate-packaged battery was used in the packaged state, and the measurement was performed in a partial fluorescence yield (PFY) mode.

From the obtained absorption spectrum, a background was removed using XAFS analysis software "Athena" widely used in XAFS, and the resultant absorption spectrum was subjected to standardization processing to adjust the intensity of attenuated XAFS vibrations to 1, thereby obtaining an X-ray absorption fine structure spectrum around a niobium (Nb)-L₃ absorption edge for determining positions of a peak A, a peak B, and a peak C.

Note that, the removal of the background at the lower energy side from the absorption edge was performed by linear extrapolation with reference to the spectrum form. Moreover, the removal of the background at the higher energy side from the absorption edge was performed with a spline curve passing through a center of vibrations with reference to the region where the XAFS vibrations were attenuated.

The X-ray absorption fine structure spectrum around the niobium (Nb)-L₃ absorption edge had three peaks, including two absorption peaks having large intensities (peak A: 2373.02 eV, peak B: 2375.77 eV) and a peak having the smaller intensity and present at the higher energy side than the two peaks (peak C: 2386.39 eV). In this example, the difference between the absorption energy at the peak top of the peak A and the absorption energy at the peak top of the peak B was 2.75 eV, and the difference between the absorption energy at the peak top of the peak A and the absorption energy at the peak top of the peak C was 13.37 eV. The evaluation results are presented in Table 2.

### (Example 2-2)

A solid-state battery produced in the same manner as in Example 2-1 was charged with a constant electric current in the environment of 25°C up to the cell voltage of 3.33 V (3.95 V based on Li potential) at a current density of 0.1 C, followed by performing constant-voltage charging at 3.33 V until the current density became 0.01 C. Then, XAFS was performed in the same manner as in Example 2-1 to obtain a niobium (Nb)-L₃ absorption edge section of an X-ray absorption fine structure spectrum of the coated positive electrode active material in the charged lithium secondary battery. The evaluation results are presented in Table 2.

### (Example 2-3)

A solid-state battery produced in the same manner as in Example 2-1 was charged with a constant electric current in the environment of 25°C up to the maximum cell voltage of 3.63 V (4.25 V based on Li potential) at a current density of 0.1 C, followed by performing constant-voltage charging at the cell voltage of 3.63 V until the current density became 0.01 C.

Then, constant-current discharging was performed to the cell voltage of 2.38 V (3.0 V based on Li potential) at 0.1 C, followed by performing constant-voltage discharging at 2.38 V until the current density became 0.01 C (initial charging and discharging).

The constant current discharge capacity in the above charging and discharging was determined as a pre-endurance-test capacity A. A was 155.0 mAh/g.

Then, as an endurance evaluation test of the battery, constant-current charging to the cell voltage of 3.63 V, and constant-voltage charging at 3.63 V were performed on the battery in the same conditions as the initial charging and discharging, the battery in the above charged state was moved to an environment of 60°C, and constant-voltage continuous charging (trickle charging) was performed at the cell voltage of 3.63 V for 120 hours.

Then, the battery was returned to 25°C, and constant-current discharging to the cell voltage of 2.38 V and constant-voltage discharging to the cell voltage of 2.38 V were performed in the same conditions as the discharging in the initial charging and discharging (second charging and discharging).

Subsequently, charging and discharging were again performed in the same manner as the initial charging and discharging (third charging and discharging).

The constant-current discharge capacity in the above charging and discharging (during the third charging and discharging) was determined as a post-endurance-test capacity B. B was 154.9 mAh/g.

This value of B/A indicates a capacity retention rate in the endurance test, and [1-(B/A)] × 100 was determined as a "capacity deterioration rate." Note that, in Example 2-1 and Example 2-2, the batteries obtained were before the endurance test, thus the capacity deterioration rates thereof were 0%. The battery of this example had [1-(B/A)] × 100 of 0.1%.

Then, constant-current charging was performed to the cell voltage of 3.33 V (3.95 V based on Li potential) at the current density of 0.1 C in the environment of 25°C, followed by performing constant-voltage charging at 3.33 V until the current density became 0.01 C. Then, XAFS was performed in the same manner as in Example 2-1, to thereby obtain a niobium (Nb)-L₃ absorption edge of an X-ray absorption fine structure spectrum of the coated positive electrode active material in the charged lithium secondary battery. The evaluation results are presented in Table 2.

### (Example 2-4)

Charging and discharging were performed and evaluation were performed in the same manner as in Example 2-3, except that the maximum voltage during charging was set at the maximum voltage of 3.73 V (4.35 V based on Li potential) in each of the first (initial) to the third charging and discharging performed in Example 2-3. The evaluation results are presented in Table 2.

### (Example 2-5)

Charging and discharging were performed and evaluation were performed in the same manner as in Example 2-3, except that the maximum voltage during charging was set at the maximum voltage of 3.83 V (4.45 V based on Li potential) in each of the first (initial) to the third charging and discharging performed in Example 2-3. The evaluation results are presented in Table 2.

### (Example 2-6)

Charging and discharging were performed and evaluation were performed in the same manner as in Example 2-3, except that the maximum voltage during charging was set at the maximum voltage of 3.93 V (4.55 V based on Li potential) in each of the first (initial) to the third charging and discharging performed in Example 2-3. The evaluation results are presented in Table 2.

**[Table 2]**

| | ABSORPTION ENERGY DIFFERENCE BETWEEN PEAK A AND PEAK B | ABSORPTION ENERGY DIFFERENCE BETWEEN PEAK A AND PEAK C | BATTERY CAPACITY DETERIORATION RATE |
|---|---|---|---|
| | (eV) | (eV) | (%) |
| EXAMPLE 2-1 | 2.75 | 13.37 | 0 |
| EXAMPLE 2-2 | 2.57 | 13.36 | 0 |
| EXAMPLE 2-3 | 2.57 | 13.37 | 0.1 |
| EXAMPLE 2-4 | 2.48 | 13.35 | 0.4 |
| EXAMPLE 2-5 | 2.25 | 13.84 | 5.0 |
| EXAMPLE 2-6 | 2.19 | 14.29 | 11.2 |

It can be understood from Table 2 that the difference between the absorption energy at the peak top of the peak A and the absorption energy at the peak top of the peak C, and the difference between the absorption energy at the peak top of the peak A and the absorption energy at the peak top of the peak B at the niobium (Nb)-L₃ absorption edge of the X-ray absorption fine structure spectrum obtained by the X-ray absorption fine structure spectroscopy (XAFS) correlate with the capacity deterioration rate of the battery.

The peak A to the peak C relate to the arrangement and symmetry of ligands around a 3d transition metal atom or 4d transition metal atom interposed between the positive electrode active material and the solid electrolyte, interatomic distance, and the like. Therefore, the change in the absorption energy difference between the peak A and the peak B, or the change in the absorption energy difference between the peak A and the peak C reflects a deteriorated state of the interface between the positive electrode active material and the solid electrolyte.

Accordingly, not only from the measurement of the single positive electrode active material in each of Example 1-1 to Example 1-9, but also with the solid-state battery to which charging and discharging were performed, whether or not the degree of the deterioration of the interface between the positive electrode active material and the solid electrolyte was small, specifically, the resistance of the interface was small could be determined by the absorption energy difference between the peak A and the peak B, or the absorption energy difference between the peak A and the peak C.

The coated positive electrode active material for lithium secondary batteries and the lithium secondary battery have been described above through the embodiments, the examples, and the like. However, the present invention is not limited to the above embodiments, examples above, and the like. It is needless to say that various modifications and changes can be made in the above embodiments, examples, and the like within the spirit of the present invention within the scope of claims.

The present application claims priority to Japanese Patent Application No. 2022-007394, filed January 20, 2022 with the Japanese Patent Office, the contents of which are incorporated herein by reference in their entirety.

### Description of the Reference Numeral

- 10: coated positive electrode active material for lithium secondary batteries
- 11: positive electrode active material
- 12: coating layer
- 30: lithium secondary battery
- 31: positive electrode
- 311: positive electrode terminal
- 32: solid electrolyte layer
- 33: negative electrode
- 331: negative electrode terminal
- 34: container

## Claims

1. A coated positive electrode active material for lithium secondary batteries, comprising:
a positive electrode active material; and
a coating layer disposed on a surface of the positive electrode active material, the coating layer including niobium atoms,
wherein, when peaks observed at a niobium (Nb)-L₃ absorption edge of an X-ray absorption fine structure spectrum of the coated positive electrode active material measured by X-ray absorption fine structure spectroscopy (XAFS) are designated as a peak A, a peak B, and a peak C in an order from lower absorption energy, a difference between absorption energy at a peak top of the peak A and absorption energy at a peak top of the peak C is 12.9 eV or greater.

2. The coated positive electrode active material for lithium secondary batteries according to claim 1,
wherein the difference between the absorption energy at the peak top of the peak A and the absorption energy at the peak top of the peak C is 12.9 eV or greater and 13.8 eV or less.

3. A coated positive electrode active material for lithium secondary batteries, comprising:
a positive electrode active material; and
a coating layer disposed on a surface of the positive electrode active material, the coating layer including niobium atoms,
wherein, when peaks observed at a niobium (Nb)-L₃ absorption edge of an X-ray absorption fine structure spectrum of the coated positive electrode active material measured by X-ray absorption fine structure spectroscopy (XAFS) are designated as a peak A, a peak B, and a peak C in an order from lower absorption energy, a difference between absorption energy at a peak top of the peak A and absorption energy at a peak top of the peak B is 3.1 eV or less.

4. The coated positive electrode active material for lithium secondary batteries according to claim 3,
wherein the difference between the absorption energy at the peak top of the peak A and the absorption energy at the peak top of the peak B is 2.3 eV or greater and 3.1 eV or less.

5. The coated positive electrode active material for lithium secondary batteries according to claim 1,
wherein a difference between the absorption energy at the peak top of the peak A and absorption energy at a peak top of the peak B is 3.1 eV or less.

6. The coated positive electrode active material for lithium secondary batteries according to claim 5,
wherein the difference between the absorption energy at the peak top of the peak A and the absorption energy at the peak top of the peak C is 12.9 eV or greater and 13.8 eV or less, and
the difference between the absorption energy at the peak top of the peak A and the absorption energy at the peak top of the peak B is 2.3 eV or greater and 3.1 eV or less.

7. The coated positive electrode active material for lithium secondary batteries according to any one of claims 1 to 6,
wherein the coating layer is amorphous.

8. The coated positive electrode active material for lithium secondary batteries according to any one of claims 1 to 7,
wherein the positive electrode active material has a layered structure.

9. The coated positive electrode active material for lithium secondary batteries according to claim 8,
wherein the positive electrode active material includes nickel, cobalt, and manganese, and
a molar ratio of nickel (Ni), cobalt (Co), manganese (Mn) is Ni : Co : Mn = x : y : z, which satisfies relationships of 0.4 < x ≤ 1.0, 0 ≤ y < 0.3, 0 ≤ z < 0.4, and x + y + z = 1.

10. A lithium secondary battery comprising:
a positive electrode;
a negative electrode; and
a solid electrolyte layer,
wherein the positive electrode includes the coated positive electrode active material for lithium secondary batteries according to any one of claims 1 to 9 and a sulfide-based solid electrolyte.
